(19) Europäisches Patentamt
European Patent Office
Office européen des brevets

(11) **EP 3 123 605 B1**

(12) **EUROPEAN PATENT SPECIFICATION**

(45) Date of publication and mention
of the grant of the patent:
**18.07.2018 Bulletin 2018/29**

(51) Int Cl.:
***H02M 5/14*** *(2006.01)*   ***B03C 3/68*** *(2006.01)*

(21) Application number: **15715152.3**

(22) Date of filing: **23.03.2015**

(86) International application number:
**PCT/DK2015/050061**

(87) International publication number:
**WO 2015/144179 (01.10.2015 Gazette 2015/39)**

(54) **A HIGH VOLTAGE POWER SUPPLY**

HOCH SPANNUNG VERSORGUNGSSCHALTUNG

ALIMENTATION HAUTE TENSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2014 DK 201470159**

(43) Date of publication of application:
**01.02.2017 Bulletin 2017/05**

(73) Proprietor: **FLSmidth A/S
2500 Valby (DK)**

(72) Inventors:
• **REYES, Victor Enrique**
**DK-2860 Søborg (DK)**
• **HANSEN, Michael Roland**
**DK-2860 Søborg (DK)**
• **NIELSEN, Anders Erling**
**DK-2600 Glostrup (DK)**

(56) References cited:
**CN-A- 1 334 573    US-A- 5 920 474**

**Description**

Technical Field

The invention relates to a high voltage power supply comprising a three-phase high voltage transformer and a three-phase high voltage bridge rectifier, and to an electrostatic precipitator apparatus comprising an electrostatic precipitator and a high voltage power supply.

Background

High voltage power supplies are used for several applications, including high voltage energization of electrostatic precipitators that are used e.g. in filtering particulate in exhausting gases from industrial processes. Such particulate has different resistivity depending on the chemical composition and properties (temperature, moisture, $SO_2$, etc.) of the flue gas. The term "flue gas" refers to gas exiting to the atmosphere via a flue, i.e. a pipe or channel for conveying exhaust gases from industrial processes. Often, an electrostatic precipitator comprises a number of electrostatic fields in series in the gas direction. Because the dust concentration decreases along the electrostatic precipitator, i.e. the dust concentration at the inlet of each field is different, each field has its own high voltage power supply.

It is known in the art of the electrostatic precipitation that the waveform of the voltage applied to the electrostatic precipitator has to match the resistivity of the particulate for an optimal performance. A smooth voltage waveform (very low ripple) applied to the various electrostatic precipitator fields is beneficial when treating particulate having low resistivity. For increasing resistivity, a voltage waveform with considerable ripple (in the range of tens of kV) is appropriate. For very high resistivity, narrow high voltage pulses (in tens of microseconds range) provided by so-called pulse generators, a much more complex equipment, are the most suitable waveform.

A smooth voltage waveform suitable for particulate having low resistivity can be generated by using a three-phase high voltage power supply comprising a three-phase high voltage transformer and a three-phase high voltage bridge rectifier. Thus, the supply may also be called a three-phase transformer-rectifier set (TR set). A transformer-rectifier set is often immersed in a transformer oil filled tank. Three-phase transformer-rectifier sets may be capable of delivering output mean voltages in the range 70-120 kV and output mean currents in the range 200-4000 mA, meaning that the power involved is considerable, e.g. 100 kV and 4000 mA will give an output power of 400 kW.

One example of a three-phase high voltage power supply is shown in US 5 920 474, which describes a so-called 12-pulse rectifier. This transformer-rectifier set comprises a three-phase high voltage transformer with two sets of secondary windings coupled in a A-connection and a Y-connection, respectively. Each set of secondary windings is connected to its own three-phase bridge rectifier and both bridge rectifiers are connected in series delivering a very smooth DC voltage to the load.

A more pulsating waveform, i.e. a voltage waveform with considerable ripple that is appropriate for increasing or medium resistivity of the particulate, can be provided by a single-phase high voltage supply. The single-phase high voltage supply comprises a single-phase transformer-rectifier set with a single-phase high voltage transformer and a single-phase high voltage bridge rectifier.

For both power supply types, i.e. the three-phase supply and the single-phase supply, the power delivered to the load may be regulated by controlling the primary side of the transformer-rectifier set by a thyristor controller, which uses the principle of phase control for continuously varying the delivered power.

The architecture of the two high voltage power supplies, i.e. the three-phase supply and the single-phase supply, described above is similar, but several of the components are different. Thus, the three-phase supply uses a three-phase high voltage transformer and a three-phase diode bridge rectifier, while the single-phase supply uses a single-phase high voltage transformer and a single-phase diode bridge rectifier. Also the thyristor controllers used are different. As a consequence, a three-phase transformer-rectifier set is bigger and heavier, and approximately 30% more expensive than a single-phase unit with similar output.

As mentioned above, the waveform of the voltage applied to the electrostatic precipitator should match the resistivity of the particulate for an optimal performance. Since the resistivity of the particulate may well change over time, e.g. by changes in the process or in the particulate chemical composition, the waveform of the applied voltage may also need to be changed, and to meet this requirement each electrostatic precipitator may thus need two separate power supplies, i.e. a three-phase supply as well as a single-phase supply.

In recent years, high voltage switched mode power supplies (SMPS) have been disclosed, e.g. in WO 94/16820. Due to the high switching frequency used in the DC/AC converter in these supplies, they can provide both types of waveforms, i.e. output voltage with high ripple and output voltage with very low ripple, so that only one supply is needed for providing the two waveforms. However, the high voltage switched mode power supplies are quite expensive (about twice as much as a three-phase transformer-rectifier set), but there are other shortcomings like the limitation in output voltage and current and reliability because of the higher complexity and compact design. Further, the pulsed operation considerably influences the mains power quality, since it can result in high line current distortion (total harmonic distortion).

Summary

Therefore, it is an object of embodiments of the invention to provide a high voltage power supply that can provide an output voltage with a high ripple waveform as well as an output voltage with a very low ripple waveform, and which can be manufactured at a lower cost than the switched mode power supplies, while at the same time it is able to handle very high power levels and has a simple and rugged well-proven construction like the transformer-rectifier construction.

According to embodiments of the invention the object is achieved in a high voltage power supply comprising a three-phase high voltage transformer and a three-phase high voltage bridge rectifier, wherein a primary side of said three-phase high voltage transformer has three input terminals, each one being connectable to one of three phases of an industrial three-phase mains net, and a secondary side of said three-phase high voltage transformer has three output terminals connected to three corresponding input terminals of said three-phase high voltage bridge rectifier, and wherein said three-phase high voltage bridge rectifier is configured to supply a rectified high voltage to a load. The object is achieved when the high voltage power supply further comprises a switching device configured to switch between a first state, in which all three input terminals of the three-phase high voltage transformer are connected to corresponding phases of said industrial three-phase mains net and the high voltage power supply can operate in a three-phase operation mode, and a second state, in which at least one of the input terminals of the three-phase high voltage transformer is disconnected from said industrial three-phase mains net and the high voltage power supply can operate in a single-phase operation mode, wherein the high voltage power supply is configured to switch from the first state to the second state by disconnecting said at least one input terminal from the industrial three-phase mains net.

When a high voltage power supply in this way can be switched between a three-phase operation mode and a single-phase operation mode the same supply is able to provide an output voltage with a high ripple waveform as well as an output voltage with a very low ripple waveform with only little additional cost compared to the usual three-phase supply, since the most expensive components are common for both operation modes. Further, since it is based on the simple and rugged well proven transformer-rectifier construction, it is able to handle very high power levels. Thus, a relatively cheap solution is achieved that covers a broad range of output power.

In one embodiment, said switching device comprises a contactor arranged to disconnect one of the input terminals of the three-phase high voltage transformer from said industrial three-phase mains net, so that in said second state two input terminals of the three-phase high voltage transformer are connected to two phases of said industrial three-phase mains net. This embodiment allows a simple solution for the switching device.

In another embodiment, said switching device comprises a contactor arranged to disconnect two of the input terminals of the three-phase high voltage transformer from said industrial three-phase mains net and connect one of these to a zero terminal of said industrial three-phase mains net, so that in said second state two input terminals of the three-phase high voltage transformer are connected to one phase and said zero terminal of said industrial three-phase mains net. This embodiment is suitable when a zero terminal is available, and especially when only a single-phase mains net is available.

In yet another embodiment, said switching device comprises a first contactor arranged to disconnect all three of the input terminals of the three-phase high voltage transformer from said industrial three-phase mains net and a second contactor arranged to connect two input terminals of the three-phase high voltage transformer to two phases of said industrial three-phase mains net, so that in said second state two input terminals of the three-phase high voltage transformer are connected to two phases of said industrial three-phase mains net via said second contactor. This embodiment is suitable e.g. in power supplies protected by a circuit breaker.

The contactors may be configured to be controlled by a manually operated switch, which is a simple and reliable solution. Alternatively, the contactors may be configured to be controlled automatically from a control unit, so that manual operation can be avoided.

When a single contactor is used, the high voltage power supply may further comprise a thyristor controller configured to control at the primary side of said three-phase high voltage transformer an output power level of the high voltage power supply, said thyristor controller comprising a set of antiparallel coupled thyristors for each phase of said industrial three-phase mains net; and firing circuitry configured to provide firing pulses to said thyristor controller under control from a control unit in dependence of the state of said contactor.

Also when two contactors are used, the high voltage power supply may further comprise a thyristor controller configured to control at the primary side of said three-phase high voltage transformer an output power level of the high voltage power supply, said thyristor controller comprising a set of antiparallel coupled thyristors for each phase of said industrial three-phase mains net; and firing circuitry configured to provide firing pulses to said thyristor controller under control from a control unit in dependence of the state of said first and second contactors.

In this case, the firing circuitry may comprise a first firing unit configured to provide firing pulses to said thyristor controller during three-phase operation mode of the high voltage power supply and a second firing unit configured to provide firing pulses to said thyristor controller during single-phase operation mode of the high voltage power supply, and wherein said first and second firing units are configured to be activated synchronously with said first and second contactors.

Alternatively, the firing circuitry may comprise one firing unit configured to provide firing pulses to said thyristor controller during three-phase operation mode as well as single-phase operation mode of the high voltage power supply, and wherein said control unit is configured to determine duration and firing angle of firing pulses provided to the thyristor controller in dependence of the operation mode of the high voltage power supply.

In some embodiments, the control unit comprises a control panel and microprocessor circuits comprising software for the control of firing pulses in each one of the operation modes of the high voltage power supply.

In other embodiments, the high voltage power supply further comprises a thyristor controller configured to control at the primary side of said three-phase high voltage transformer an output power level of the high voltage power supply, said thyristor controller comprising a set of antiparallel coupled thyristors for each phase of said industrial three-phase mains net; and firing circuitry configured to provide firing pulses to said thyristor controller under control from a control unit, wherein said firing circuitry and said control unit are further configured to block firing pulses to the set of antiparallel coupled thyristors for one phase of said industrial three-phase mains net, so that in said second state one of the input terminals of the three-phase high voltage transformer is disconnected from said industrial three-phase mains net. In this way, the three-phase high voltage power supply can be switched between three-phase operation and single-phase operation without the use of electromechanical contactors and switches.

Said firing circuitry and said control unit may further be configured to synchronize firing pulses in said second state to the sets of antiparallel coupled thyristors for the two remaining phases of said industrial three-phase mains net.

Alternatively, said firing circuitry and said control unit may further be configured to continuously provide firing pulses in said second state to the set of antiparallel coupled thyristors for one of the two remaining phases of said industrial three-phase mains net.

An electrostatic precipitator apparatus may comprise an electrostatic precipitator and a high voltage power supply as described above.

Brief Description of the Drawings

Embodiments of the invention will now be described more fully below with reference to the drawings, in which

Figure 1 shows a block diagram of a three-phase high voltage power supply;

Figure 2 shows an output waveform of an output voltage of the three-phase high voltage power supply of Figure 1;

Figure 3 shows a block diagram of a three-phase high voltage power supply including a thyristor controller, a circuit breaker and a contactor;

Figure 4 shows a block diagram of a single-phase high voltage power supply including a thyristor controller, a circuit breaker and a contactor;

Figure 5 shows an output waveform of an output voltage of the single-phase high voltage power supply of Figure 4;

Figure 6 shows a block diagram of the three-phase high voltage power supply of Figure 1 in greater detail;

Figure 7 shows a phasor diagram of voltages in the three-phase high voltage power supply of Figure 6;

Figure 8 shows a block diagram of the three-phase high voltage power supply of Figure 6 with one phase disconnected by a contactor;

Figure 9 shows a phasor diagram of voltages in the three-phase high voltage power supply of Figure 8;

Figure 10 shows an embodiment of a three-phase high voltage power supply with a switching device for switching the supply between three-phase operation and single-phase operation;

Figure 11 shows another embodiment of a three-phase high voltage power supply with a switching device for switching the supply between three-phase operation and single-phase operation;

Figure 12 shows yet another embodiment of a three-phase high voltage power supply with a switching device for switching the supply between three-phase operation and single-phase operation;

Figure 13 shows an embodiment of firing circuitry with two separate firing units for providing firing pulses to a thyristor controller in a high voltage power supply;

Figure 14 shows an embodiment of firing circuitry with one firing unit for providing firing pulses to a thyristor controller in a high voltage power supply, and

Figure 15 shows an embodiment of a three-phase high voltage power supply in which the supply can be switched between three-phase operation and single-phase operation without the use of electromechanical contactors and switches.

Detailed Description

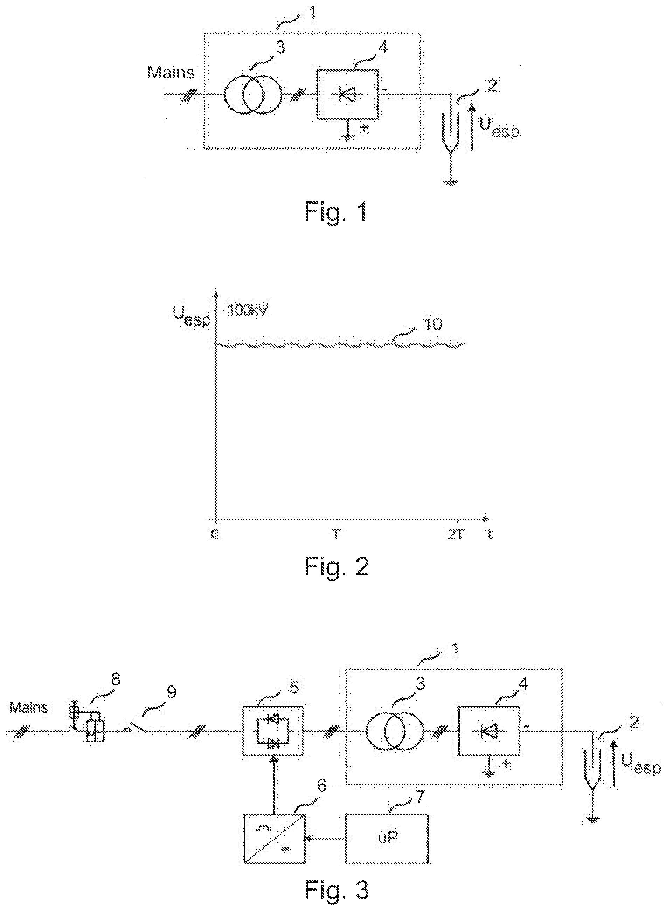

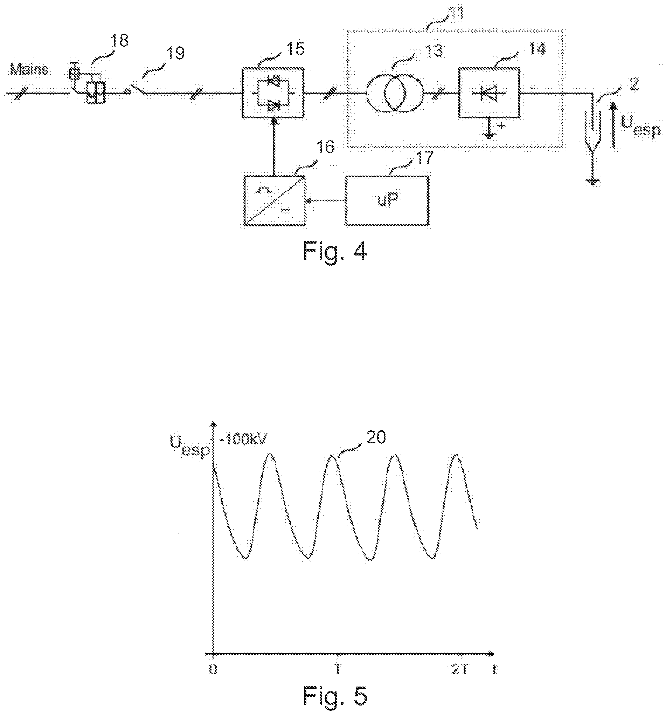

Figure 1 shows a block diagram of an example of a high voltage power supply 1 that can be used for several applications, one of which is the high voltage energization of electrostatic precipitators, such as the electrostatic precipitator 2 that is shown in the figure as a load for the high voltage power supply 1. However, it is noted that the high voltage power supply 1 can be used for many other types of loads as well. The shown high voltage supply 1 is a three-phase supply and it comprises a three-phase high voltage transformer 3 and a three-phase high voltage bridge rectifier 4. Thus, the supply 1 may also be called a three-phase transformer-rectifier set (TR set). A transformer-rectifier set is often immersed in a transformer oil filled tank.
The use of a three-phase supply ensures that the output voltage applied to the electrostatic precipitator 2 can be relatively smooth (i.e. with low ripple). This is illustrated in the smooth waveform 10 in Figure 2, which is shown for two periods of the line frequency (2T). The output voltage is here applied to the electrostatic precipitator 2 with negative polarity, so that negative corona is generated inside the electrostatic precipitator. Note that the value -100kV on Y-axis should be considered only as example. Three-phase transformer-rectifier sets may be capable of delivering output mean voltages in the range 70-120 kV and output mean currents in the range 200-4000 mA, meaning that the power involved is considerable, e.g. 100 kV and 4000 mA will give an output power of 400 kW.
For some applications, it is advantageous that the power supply is able to regulate the power delivered to the load, e.g. the electrostatic precipitator 2. As shown in Figure 3, this can be done by controlling the primary side of the three-phase transformer-rectifier set 1 by a thyristor controller 5, which may be mounted inside a control cabinet. The thyristor controller is sometimes also called an AC line regulator and uses the principle of phase control for continuously varying the power delivered to a load. Phase control means that the firing angle of the individual thyristors is delayed or advanced for decreasing or increasing, respectively, the power delivered to the load. A three-phase thyristor controller uses a thyristor regulator in each phase comprising a pair of thyristors connected in antiparallel. The firing angle of the individual thyristors in the three-phase thyristor controller 5 can be controlled by a firing unit 6 and an automatic control unit 7 that may be microprocessor based. The thyristor controller may be protected by a circuit breaker 8, and it can be connected and disconnected by means of a main contactor 9.
As mentioned, such high voltage supplies are typically used for energizing electrostatic precipitators. An electrostatic precipitator is used in filtering particulate in exhausting gases from industrial processes. This particulate has different resistivity depending on the chemical composition and properties (temperature, moisture, $SO_2$, etc.) of the gases exhausted from the industrial processes. Often, an electrostatic precipitator comprises a number of electrostatic fields in series in the gas direction. Because the dust concentration decreases along the electrostatic precipitator, i.e. the dust concentration at the inlet of each field is different, each field has its own high voltage power supply.
It is known in the art of the electrostatic precipitation that the waveform of the voltage applied to the electrostatic precipitator has to match the resistivity of the particulate for an optimal performance. A smooth voltage waveform (very low ripple) applied to the various electrostatic precipitator fields is beneficial when treating particulate having low resistivity. As mentioned above, this smooth voltage waveform can be generated by using three-phase transformer-rectifier sets. For increasing resistivity, a voltage waveform with considerable ripple (in the range of tens of kV) is appropriate. For very high resistivity, narrow high voltage pulses (in tens of microseconds range) provided by so-called pulse generators, a much more complex equipment, are the most suitable waveform.
A more pulsating waveform, i.e. a voltage waveform with considerable ripple that is appropriate for increasing or medium resistivity of the particulate, can be provided by a single-phase high voltage supply as illustrated in Figure 4. The single-phase high voltage supply comprises a single-phase transformer-rectifier set 11 with a single-phase high voltage transformer 13 and a single-phase high voltage bridge rectifier 14. The single-phase supply ensures that the output voltage applied to the electrostatic precipitator 2 is more pulsating (i.e. with considerable ripple). This is illustrated in the waveform 20 in Figure 5, which is shown for two periods of the line frequency (2T).

Also for the single-phase supply, it is advantageous that the power supply is able to regulate the power delivered to the load, e.g. the electrostatic precipitator 2. Similar to the three-phase supply of Figure 3, this can be done by controlling the primary side of the single-phase transformer-rectifier set 11 by a thyristor controller 15, which may be mounted inside a control cabinet. The firing angle of the individual thyristors in the single-phase thyristor controller 15 can be controlled by a firing unit 16 and an automatic control unit 17 that may be microprocessor based. Also here, the thyristor controller may be protected by a circuit breaker 18, and it can be connected and disconnected by means of a main contactor 19. This operation mode (Figure 5) is called normal DC-operation, but single-phase transformer-rectifier sets can also provide the so-called intermittent energization (IE) giving a more pulsation voltage waveform. This is obtained by blocking the firing pulses for an even number of half-periods of the line frequency.

As illustrated in Figure 4, there are two conductors connected to the mains input of the single-phase supply. These may be connected either to one phase and a ground or zero of a single-phase system or to two phases of a three-phase system. If two phases of a three-phase system are used, a higher voltage, and thus a higher power, can be provided, but for many applications, the voltage of a single-phase system is sufficient. Alternatively, the lower voltage of a single-phase system may be compensated by adjusting the winding ratio of the transformer correspondingly.

The architecture of the two high voltage power supplies, i.e. the three-phase supply and the single-phase supply, described above is similar, but several of the components are different. Thus, in contrast to Figure 3, the high voltage transformer 13 and the diode bridge rectifier 14 are single-phase components instead of three-phase components. Also the thyristor controller 15 and the corresponding firing unit 16 are single-phase components. The hardware of the $\mu$P-based control unit 17 may be the same as in control unit 7, while the software included in it could be different. As a consequence, a three-phase transformer-rectifier set is bigger and heavier, and approximately 30% more expensive than a single-phase unit with similar output.

As mentioned above, the waveform of the voltage applied to the electrostatic precipitator should match the resistivity of the particulate for an optimal performance. Since the resistivity of the particulate may well change over time, e.g. by changes in the process or in the particulate chemical composition, the waveform of the applied voltage may also need to be changed, and to meet this requirement each electrostatic precipitator may thus need two separate power supplies, i.e. a three-phase supply as well as a single-phase supply. Below it is described how a three-phase supply can be modified so that its operation can be converted from three-phase operation to single-phase operation or vice versa, when this is needed.

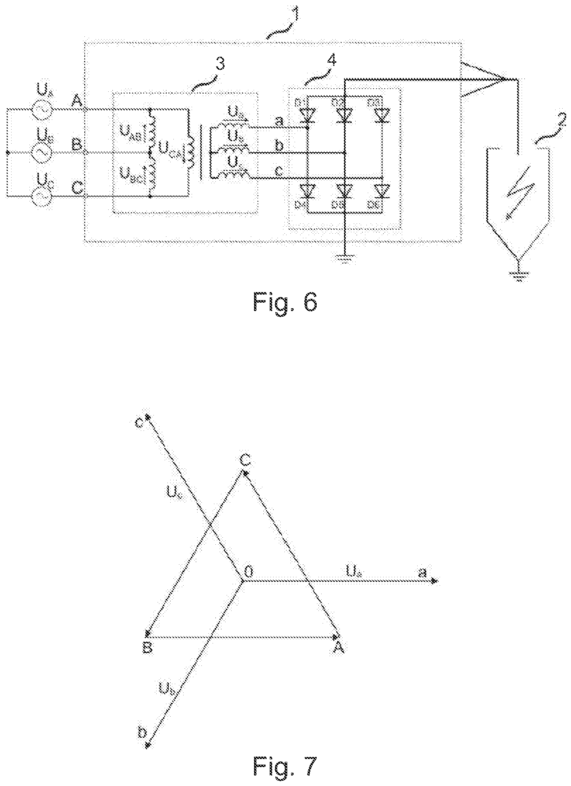

Figure 6 corresponds to Figure 1, except that it shows the three-phase high voltage transformer 3 and the three-phase high voltage bridge rectifier 4 of the transformer-rectifier set 1 in greater detail. The transformer 3 is connected directly to the three-phase mains. The high voltage transformer 3 is here coupled in a delta-star ($\Delta$-Y) configuration and its secondary feeds the high voltage three-phase bridge rectifier 4 as shown. The output of the transformer-rectifier set 1 is applied to the electrostatic precipitator 2 with negative polarity, so that negative corona is generated inside the electrostatic precipitator. The triangle at the output of the transformer-rectifier set illustrates a high voltage insulator that may be needed due to the high voltage levels.

The rated voltage of the transformer-rectifier set is defined as the peak value of the line-to-line secondary voltage at no-load, so:

$$U_{o\,rated\,3\emptyset} = \sqrt{2} \cdot U_{ab} = \sqrt{6} \cdot U_a = 2.45 \cdot U_a \;,$$

where $U_a$ is the secondary phase voltage.

The ideal mean output voltage neglecting losses and leakage inductances is:

$$U_{DC\,ideal} = 2.34 \cdot U_a = 0.995 \cdot U_{o\,rated}$$

Figure 7 shows the corresponding phasor diagram, where it is supposed that the winding transformation ratio $n_w$ is 1. The phasor diagram indicates that the secondary phase voltages $U_a$, $U_b$ and $U_c$ are in phase with the respective line-to-line primary voltages $U_{AB}$, $U_{BC}$ and $U_{CA}$. Figures 6 and 7 illustrate normal three-phase operation of the three-phase transformer-rectifier set 1.

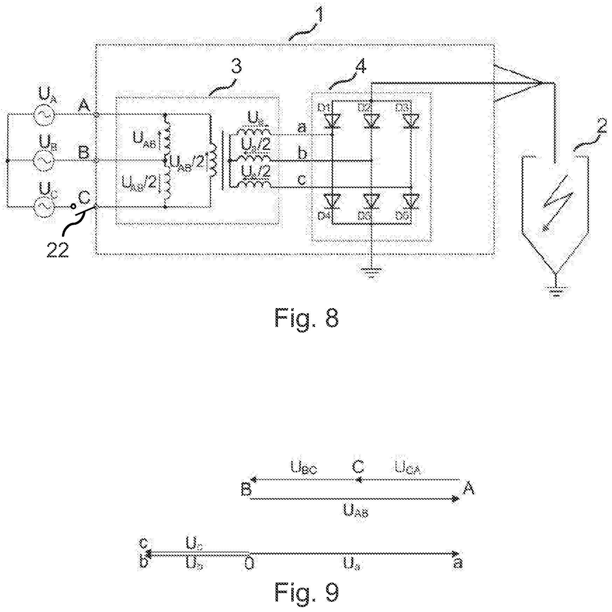

Figure 8 illustrates how the three-phase transformer-rectifier set 1 can be switched or converted to operate in single-phase operation. It can be seen that the terminal to phase C of the three-phase mains is disconnected by means of a switching device or contactor 22, so that only the line-to-line voltage $U_{AB}$ is applied to the transformer 3. As shown in the figure, this means that:

$$U_{BC} = U_{CA} = -\frac{1}{2} \cdot U_{AB}$$

and

$$U_b = U_c = -\frac{1}{2} \cdot U_a$$

These relationships are illustrated by the corresponding phasor diagram of Figure 9.

This means that the three-phase bridge rectifier now operates as a single-phase one, and the AC supply voltage feeding it is:

$$U_{ab} = U_a - U_b = U_a + \frac{1}{2} \cdot U_a = 1.5 \cdot U_a$$

so that the rated output voltage of the transformer-rectifier set in single-phase operation is:

$$U_{o\,rated\,1\phi} = \sqrt{2} \cdot U_{ab} = 1.5 \cdot \sqrt{2} \cdot U_a = 2.12 \cdot U_a$$

As $U_a$ is the same in both cases, the rated voltage of the transformer-rectifier set in single-phase operation, compared with the rated voltage valid during three-phase operation of the transformer-rectifier set, is approximately 16% lower.

Thus by arranging a switching device that is configured to disconnect one of the phases of the three-phase mains from the three-phase transformer-rectifier set, the set can be converted from operating in three-phase operation to operating in single-phase operation or vice versa. It is noted that if a ground or zero terminal is available, it is also possible to disconnect two of the phases and instead connect one of the disconnected input terminals of the three-phase transformer-rectifier set to this ground or zero terminal. However, this results in a lower output voltage because the voltage between a phase and zero is lower than the voltage between two phases.

When the primary side of the three-phase transformer-rectifier set 1 is controlled by a thyristor controller 5, as shown in Figure 3, some additional switching may be advantageous to ensure optimal performance. Also when the thyristor controller 5 is protected by a circuit breaker 8, and/or it is connected and disconnected by means of a main contactor 9, some additional switching may be needed, depending on the component types. Some embodiments illustrating this are described below.

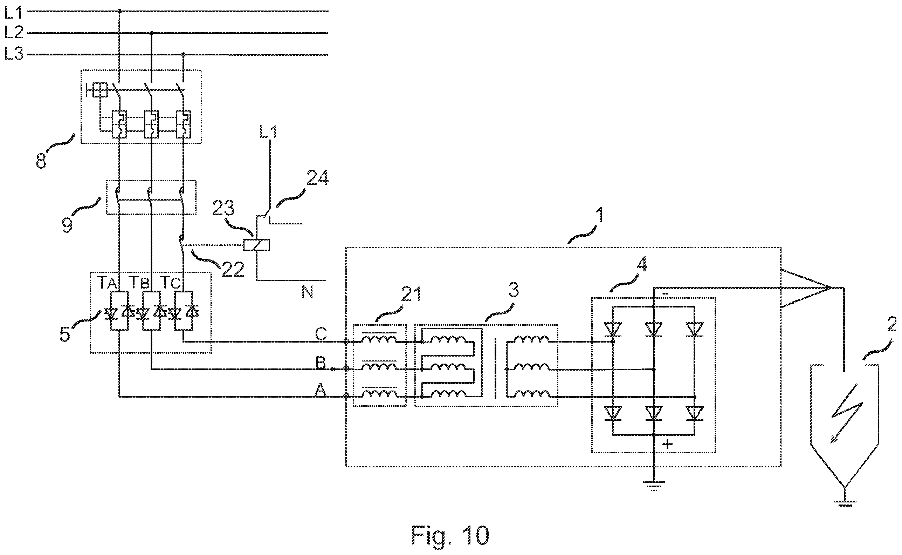

Figure 10 shows one example of how a switching device allowing a three-phase transformer-rectifier set 1 to be switched between three-phase operation and single-phase operation can be implemented. The embodiment of Figure 10 corresponds to

Figure 3, i.e. the delivered output power is regulated by means of a thyristor controller 5 protected by a circuit breaker 8 and a main contactor 9.

The three-phase transformer-rectifier set 1 includes the high voltage transformer 3 and the bridge rectifier 4 plus linear chokes 21 in series with the primary of the transformer. Their function is to limit the primary current in case of spark/arc or short-circuit inside the field of the electrostatic precipitator 2 by increasing the short-circuit voltage of the transformer (4-8 %) to typically 20-40 %. The three-phase thyristor controller 5, the circuit breaker 8 and the main contactor 9 are energized from the three-phase industrial line L1-L2-L3. The thyristor controller 5 comprises, as mentioned, one thyristor module in each phase ($T_A$, $T_B$, $T_C$) consisting of a pair of antiparallel connected thyristors. Each of the six thyristors receives a firing pulse at its gate from a firing unit 6. The firing angle is determined by a control unit 7 and sent as a command to the firing unit 6 (as shown in Figure 3). Embodiments of the firing unit 6 and the $\mu$P-based control unit 7 are shown in more detail below.

The embodiment of Figure 10 uses a simplified change over from three-phase to single-phase operation. This is achieved by interrupting one phase (e.g. L3) by means of a switching device in the form of a contactor 22 which is normally (i.e. during three-phase operation) closed by keeping its coil 23 energized via a contact 24. When single-phase operation is needed contact 24 is opened so that contactor 22 is turned off. Contact 24 may be operated manually or it can be controlled e.g. from the control unit 7. The operation of contactor 22 may also directly be performed manually, but because of the thickness of the power cables involved, this operation could take too long time and thus be considered as inacceptable. When contactor 22 is open, i.e. during single-phase operation, thyristor module $T_C$ of the thyristor controller 5 is disconnected (floating), while thyristor modules $T_A$ and $T_B$ remains in operation. However, since the current through these modules is the same, although in opposite direction, their firing gate pulses need to be synchronized.

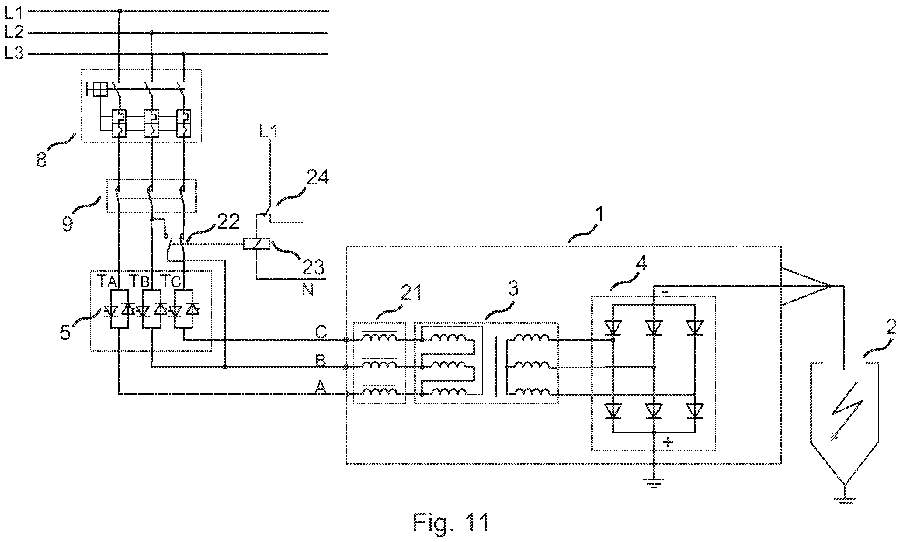

Figure 11 shows an embodiment in which only one thyristor module is active. Here, the contactor 22 is equipped with an extra contact in such a way that when one phase (e.g. L3) is interrupted, one thyristor module (e.g. $T_B$) is at the same time short-circuited by the extra contact. In this way only one thyristor module is active (e.g. $T_A$).

Depending on the function of the circuit breaker 8, the above embodiments may have some shortcomings regarding the expected protection function of the circuit breaker, as one phase is now interrupted. If this should be the case, an embodiment as described below can be used.

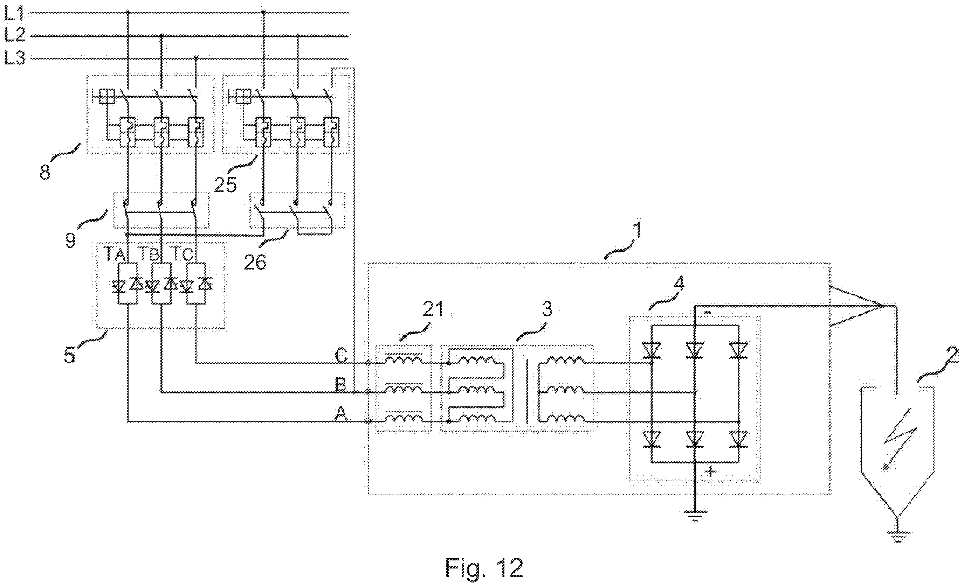

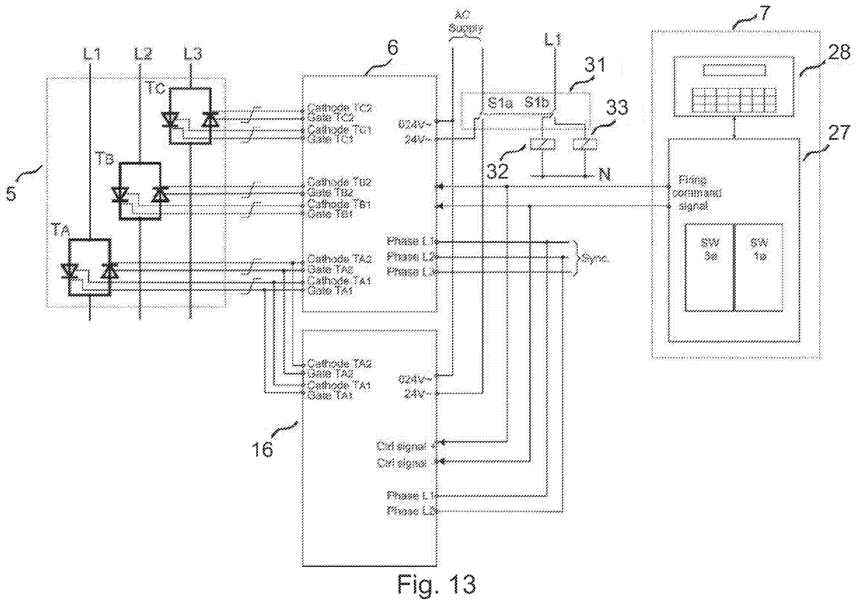

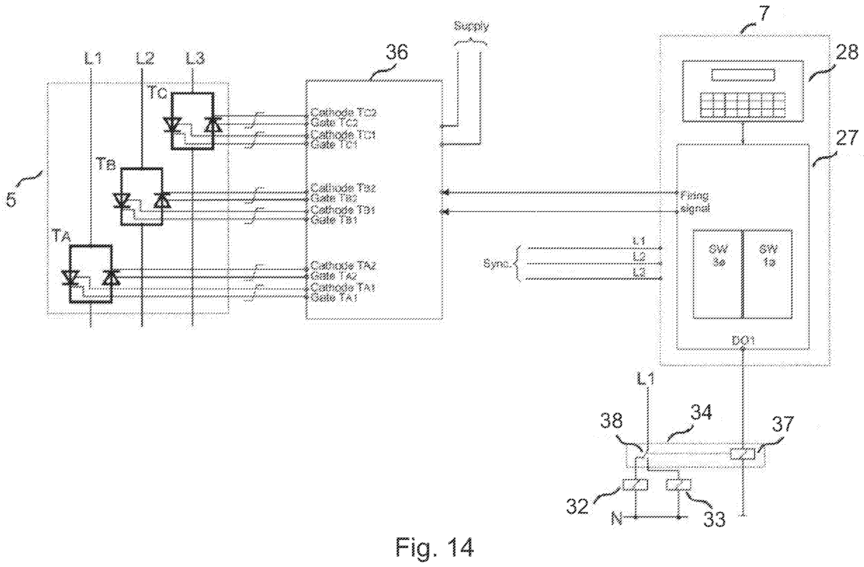

Figure 12 shows another embodiment of the changeover in the mains circuit. This embodiment uses the addition of one auxiliary circuit breaker 25 and one auxiliary main contactor 26. The coils of the switching devices or main contactors 9 and 26 are energized in such a way that when contactor 9 is closed (three-phase operation) then auxiliary contactor 26 is open and vice-versa (single-phase operation). The operation of the coils controlling main contactors 9 and 26 will be described below with reference to Figures 13 and 14.

When the change-over from three-phase operation to single-phase operation is carried out, contactor 9 is opened, but thyristor module $T_A$ of the thyristor controller 5 remains in operation via the left contact of the auxiliary contactor 26, while the terminal B of the transformer-rectifier set 1 is returned to phase L2 via the two other contacts (center, right) of auxiliary contactor 26, which are connected in series. The thyristor modules $T_B$ and $T_C$ are floating because the three-phase main contactor 9 in this case is open. The circuit breakers 8 and 25 can be ON at the same time, but only breaker 8 need to be ON in three-phase operation and auxiliary breaker 25 in single-phase operation. Auxiliary breaker 25 is necessary for protecting the transformer-rectifier set in single-phase operation as breaker 8 is out of function when auxiliary contactor 9 is open. The series connection of the two contacts (center, right) of auxiliary contactor 26 ensures that the current levels in the three sections of the auxiliary breaker 25 during single-phase operation are the same, which may be required for some circuit breaker types.

When the power supply is switched from three-phase operation to single-phase operation or vice versa in a system using a thyristor controller, changes are also needed in relation to the firing units. For a three-phase thyristor controller 5 in Figure 3, each of the six firing gate pulses has a typical duration of 120 degrees or consists of two narrower pulses 60 degrees apart. For single-phase thyristor controller 15 in Figure 4, it is not recommended to apply a gate pulse to a thyristor when it is biased in the reverse direction. Therefore, in the supplies that can be switched between three-phase operation and single-phase operation the firing units should preferably be able to apply different gate pulses depending on the operation mode, i.e. three- or single-phase. Two different embodiments of doing this are described below.

Figure 13 shows an embodiment for change-over of the firing unit and the software installed in the control unit 7, in which two separate firing units are used, i.e. one firing unit 6 for three-phase operation and one firing unit 16 for single-phase operation. The control unit 7 is represented by microprocessor circuits 27 and a control panel 28. In this case, the two firing units are connected in parallel and receive the synchronization to the three-phase lines (L1-L2-L3) as shown (Sync.).

The switchover from one operation mode to the other may be controlled by the use of a manually operated Double Pole Double Throw (DPDT) switch 31 with two sets of contacts (S1a and S1b). In the shown position, which corresponds to three-phase operation, contact S1a ensures that the AC power supply for firing unit 6 is ON, while it is OFF for firing unit 16. Contact S1b correspondingly ensures that the coil 32 of the three-phase main contactor 9 of Figure 12 is energized, while the coil 33 of the auxiliary contactor 26 is de-energized. When the DPDT changeover switch 31 is moved to the other position single-phase operation is enabled, as coil 33 is energized and the firing unit 16 as well.

When operation should be changed from three-phase operation to single-phase operation, a sequence of events can be as follows: The transformer-rectifier set is turned off from the control panel 28 of the μP-based control unit 7. Then a parameter enabling the software for single-phase operation is set by means of the control panel 28 and then the changeover switch 31 is manually moved to single-phase-position.

For reversing to three-phase operation, the sequence is: The transformer-rectifier set is turned off from the control panel 28 of the μP-based control unit 7. Then the parameter enabling the software for three-phase operation is set by means of the control panel 28 and then the changeover switch 31 is moved back to the three-phase-position.

In another embodiment shown in Figure 14, a common firing unit 36 is designed in a way that it can manage both three-phase and single-phase operation. In both cases, all six thyristors receive a firing gate pulse, but in single-phase mode modules $T_B$ and $T_C$ of thyristor controller 5 are disconnected from the mains because main contactor 26 is open, so they are in practice out of function.

For the sake of simplicity, in single-phase operation it is assumed that the thyristor module $T_A$ connected to phase L1 is the one active, requiring that the firing pulses be synchronized to phases L1 and L2. In case module $T_B$ or $T_C$ is used, then the firing pulses have to be synchronized correspondingly to the other phases.

In this embodiment, the firing signal is generated in the μP-circuits 27 and transferred to the firing unit 36 by a wired connection or by optical fibers. As an alternative to the embodiment of Figure 13 using a manually operated Double Pole Double Throw (DPDT) switch 31, the change-over is here performed automatically by control unit 7 (via a digital output (DO1) controlling a relay 34) after the transformer-rectifier set has been turned off and the parameter selecting the operating mode has been set correspondingly. In the situation shown in Figure 14, coil 37 of relay 34 is de-energized so three-phase contactor coil 32 is activated via contact 38. When single-phase operation is commanded by parameter setting in the control unit 7, the μP-circuits 27 send the respective command to relay 34, activating its coil 37. This in turn activates single-phase contactor coil 33 via contact 38, and single-phase operation is thus enabled. The control unit 7 sends the firing signal with the correct duration to the firing unit 36. Figure 14 also shows that the synchronization (Sync.) to the three-phase line (L1-L2-L3) is now connected to the control unit 7.

In the embodiments described above, switching devices, such as circuit breakers 8 and 25, main contactors 9 and 26, contactor 22 and contacts 24 are shown as electromechanical devices. However, each or some of these switching devices may also be implemented with controllable semiconductor switching devices, such as field effect transistors.

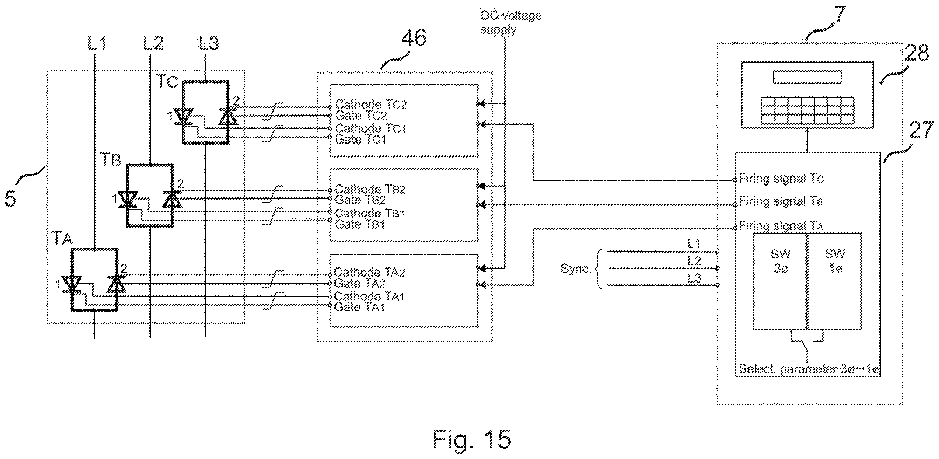

Switching-over from three-phase to single-phase operation and vice-versa can also be performed without the use of electromechanical contactors and switches as described above. Instead, the switching can be made by controlling the firing pulses supplied to the thyristor controller 5. An example of this principle is illustrated in Figure 15, where the firing of the thyristor controller 5 is performed by three identical single-phase firing boards in a firing unit 46. The microprocessor-based control unit 7 receives the synchronization signals directly and sends three individual firing signals to each firing board indicating the firing angle.

In case of three-phase operation all three thyristor modules TA, TB and TC in Figure 15 receive the firing signal in the correct sequence as usual for this type of operation.

In case of single-phase operation, the firing signal to one of the thyristor modules, e.g. module TC, is blocked, which is equivalent to a disconnection of phase L3. Thyristors TA1 and TB2 are fired simultaneously in the positive half-period of the line-to-line voltage (L1-L2) and then the thyristors TB1 and TA2 are fired simultaneously in the negative half-period of the line-to-line voltage. In this way, like in Figure 10, thyristor modules TA and TB remain in operation and since the current through these modules is the same, although in opposite direction, their firing gate pulses are synchronized.

Alternatively, like in Figure 11, an embodiment in which only one thyristor module is active is also possible. In that case, one of the thyristor modules, e.g. module TC as above, is blocked in single-phase operation, while at the same time another module, e.g. module TB, is effectively short-circuited, which can be done by supplying firing signals to its thyristors continuously.

The switch-over between both operation modes is normally performed manually in the control unit 7 by changing a selection parameter. However, it can also be performed automatically in case of certain electrical operation conditions of the electrostatic precipitator 2 communicated to the control unit from the outside world via existing current and voltage signals of the high voltage transformer-rectifier set 1.

It is noted that the firing unit 46 with three identical single-phase firing boards can also be used instead of the firing units 6, 16 or 36 in the embodiments of Figures 13 and 14.

Further, it can be mentioned that the thyristor controller 5 in the embodiments described above may also be implemented with other types of controllable semiconductor switching devices having the capability of controllable turn-off, such as an Insulated Gate Bipolar Transistors, IGBTs, instead of the thyristors described above.

In other words, a high voltage power supply is disclosed that comprises a three-phase high voltage transformer and a three-phase high voltage bridge rectifier, wherein a primary side of said three-phase high voltage transformer has three input terminals, each one being connectable to one of three phases of an industrial three-phase mains net, and a secondary side of said three-phase high voltage transformer has three output terminals connected to three corresponding input terminals of said three-phase high voltage bridge rectifier, and wherein said three-phase high voltage bridge rectifier is configured to supply a rectified high voltage to a load. The high voltage power supply further comprises a switching device configured to switch between a first state, in which all three input terminals of the three-phase high voltage transformer are connected to corresponding phases of said industrial three-phase mains net and the high voltage power supply can operate in a three-phase operation mode, and a second state, in which at least one of the input terminals of the three-phase high voltage transformer is disconnected from said industrial three-phase mains net and the high voltage power supply can operate in a single-phase operation mode.

When a high voltage power supply in this way can be switched between a three-phase operation mode and a single-phase operation mode the same supply is able to provide an output voltage with a high ripple waveform as well as an output voltage with a very low ripple waveform with only little additional cost compared to the usual three-phase supply, since the most expensive components are common for both operation modes. Further, since it is based on the simple and rugged well-proven transformer-rectifier construction, it is able to handle very high power levels. Thus, a relatively cheap solution is achieved that covers a broad range of output power.

In one embodiment, said switching device comprises a contactor arranged to disconnect one of the input terminals of the three-phase high voltage transformer from said industrial three-phase mains net, so that in said second state two input terminals of the three-phase high voltage transformer are connected to two phases of said industrial three-phase mains net. This embodiment allows a simple solution for the switching device.

In another embodiment, said switching device comprises a contactor arranged to disconnect two of the input terminals of the three-phase high voltage transformer from said industrial three-phase mains net and connect one of these to a zero terminal of said industrial three-phase mains net, so that in said second state two input terminals of the three-phase high voltage transformer are connected to one phase and said zero terminal of said industrial three-phase mains net. This embodiment is suitable when a zero terminal is available, and especially when only a single-phase mains net is available.

In yet another embodiment, said switching device comprises a first contactor arranged to disconnect all three of the input terminals of the three-phase high voltage transformer from said industrial three-phase mains net and a second contactor arranged to connect two input terminals of the three-phase high voltage transformer to two phases of said industrial three-phase mains net, so that in said second state two input terminals of the three-phase high voltage transformer are connected to two phases of said industrial three-phase mains net via said second contactor. This embodiment is suitable e.g. in power supplies protected by a circuit breaker.

The contactors may be configured to be controlled by a manually operated switch, which is a simple and reliable solution. Alternatively, the contactors may be configured to be controlled automatically from a control unit, so that manual operation can be avoided.

When a single contactor is used, the high voltage power supply may further comprise a thyristor controller configured to control at the primary side of said three-phase high voltage transformer an output power level of the high voltage power supply, said thyristor controller comprising a set of antiparallel coupled thyristors for each phase of said industrial three-phase mains net; and firing circuitry configured to provide firing pulses to said thyristor controller under control from a control unit in dependence of the state of said contactor.

Also when two contactors are used, the high voltage power supply may further comprise a thyristor controller configured to control at the primary side of said three-phase high voltage transformer an output power level of the high voltage power supply, said thyristor controller comprising a set of antiparallel coupled thyristors for each phase of said industrial three-phase mains net; and firing circuitry configured to provide firing pulses to said thyristor controller under control from a control unit in dependence of the state of said first and second contactors.

In this case, the firing circuitry may comprise a first firing unit configured to provide firing pulses to said thyristor controller during three-phase operation mode of the high voltage power supply and a second firing unit configured to provide firing pulses to said thyristor controller during single-phase operation mode of the high voltage power supply, and wherein said first and second firing units are configured to be activated synchronously with said first and second contactors.

Alternatively, the firing circuitry may comprise one firing unit configured to provide firing pulses to said thyristor controller during three-phase operation mode as well as single-phase operation mode of the high voltage power supply, and wherein said control unit is configured to determine duration and firing angle of firing pulses provided to the thyristor controller in dependence of the operation mode of the high voltage power supply.

In some embodiments, the control unit comprises a control panel and microprocessor circuits comprising software for the control of firing pulses in each one of the operation modes of the high voltage power supply.

In other embodiments, the high voltage power supply further comprises a thyristor controller configured to control at the primary side of said three-phase high voltage transformer an output power level of the high voltage power supply, said thyristor controller comprising a set of antiparallel coupled thyristors for each phase of said industrial three-phase mains net; and firing circuitry configured to provide firing pulses to said thyristor controller under control from a control unit, wherein said firing circuitry and said control unit are further configured to block firing pulses to the set of antiparallel coupled thyristors for one phase of said industrial three-phase mains net, so that in said second state one of the input terminals of the three-phase high voltage transformer is disconnected from said industrial three-phase mains net. In this way, the three-phase high voltage power supply can be switched between three-phase operation and single-phase operation without the use of electromechanical contactors and switches.

Said firing circuitry and said control unit may further be configured to synchronize firing pulses in said second state to the sets of antiparallel coupled thyristors for the two remaining phases of said industrial three-phase mains net.

Alternatively, said firing circuitry and said control unit may further be configured to continuously provide firing pulses in said second state to the set of antiparallel coupled thyristors for one of the two remaining phases of said industrial three-phase mains net.

An electrostatic precipitator apparatus may comprise an electrostatic precipitator and a high voltage power supply as described above.

**Claims**

**1.** A high voltage power supply comprising a three-phase high voltage transformer (3) and a three-phase high voltage bridge rectifier (4), wherein a primary side of said three-phase high voltage transformer (3) has three input terminals, each one being connectable to one of three phases (A, B, C; L1, L2, L3) of an industrial three-phase mains net, and a secondary side of said three-phase high voltage transformer (3) has three output terminals connected to three corresponding input terminals of said three-phase high voltage bridge rectifier (4), and wherein said three-phase high voltage bridge rectifier (4) is configured to supply a rectified high voltage to a load (2), the high voltage power supply having a first state, in which all three input terminals of the three-phase high voltage transformer (3) are connected to corresponding phases of said industrial three-phase mains net and the high voltage power supply can operate in a three-phase operation mode, **characterized in that** the high voltage power supply further is configured to switch between said first state and a second state, in which at least one of the input terminals of the three-phase high voltage transformer (3) is disconnected from said industrial three-phase mains net and the high voltage power supply can operate in a single-phase operation mode, wherein the high voltage power supply is configured to switch from the first state to the second state by disconnecting said at least one input terminal from the industrial three-phase mains net.

2. A high voltage power supply according to claim 1, wherein the high voltage power supply further comprises a switching device (22; 9, 26) configured to switch between said first state and said second state.

3. A high voltage power supply according to claim 2, wherein said switching device comprises a contactor (22) arranged to disconnect one of the input terminals of the three-phase high voltage transformer (3) from said industrial three-phase mains net, so that in said second state two input terminals of the three-phase high voltage transformer (3) are connected to two phases of said industrial three-phase mains net.

4. A high voltage power supply according to claim 2, wherein said switching device comprises a contactor arranged to disconnect two of the input terminals of the three-phase high voltage transformer (3) from said industrial three-phase mains net and connect one of these to a zero terminal of said industrial three-phase mains net, so that in said second state two input terminals of the three-phase high voltage transformer (3) are connected to one phase and said zero terminal of said industrial three-phase mains net.

5. A high voltage power supply according to claim 2, wherein said switching device comprises a first contactor (9) arranged to disconnect all three of the input terminals of the three-phase high voltage transformer (3) from said industrial three-phase mains net and a second contactor (26) arranged to connect two input terminals of the three-phase high voltage transformer (3) to two phases of said industrial three-phase mains net, so that in said second state two input terminals of the three-phase high voltage transformer (3) are connected to two phases of said industrial three-phase mains net via said second contactor.

6. A high voltage power supply according to any one of claims 3 to 5, wherein said contactors (22; 9, 26) are configured to be controlled by a manually operated switch (31).

7. A high voltage power supply according to any one of claims 3 to 5, wherein said contactors (22; 9, 26) are configured to be controlled automatically from a control unit (7).

8. A high voltage power supply according to claim 3 or 4, wherein the high voltage power supply further comprises

    • a thyristor controller (5) configured to control at the primary side of said three-phase high voltage transformer (3) an output power level of the high voltage power supply, said thyristor controller (5) comprising a set of antiparallel coupled thyristors for each phase of said industrial three-phase mains net; and
    • firing circuitry (6; 16) configured to provide firing pulses to said thyristor controller (5) under control from a control unit (7) in dependence of the state of said contactor (22).

9. A high voltage power supply according to claim 5, wherein the high voltage power supply further comprises

    • a thyristor controller (5) configured to control at the primary side of said three-phase high voltage transformer (3) an output power level of the high voltage power supply, said thyristor controller (5) comprising a set of antiparallel coupled thyristors for each phase of said industrial three-phase mains net; and
    • firing circuitry (6; 16) configured to provide firing pulses to said thyristor controller (5) under control from a control unit (7) in dependence of the state of said first and second contactors (9,26).

10. A high voltage power supply according to claim 9, wherein said firing circuitry comprises a first firing unit (6) configured to provide firing pulses to said thyristor controller (5) during three-phase operation mode of the high voltage power supply and a second firing unit (16) configured to provide firing pulses to said thyristor controller (5) during single-phase operation mode of the high voltage power supply, and wherein said first and second firing units are configured to be activated synchronously with said first and second contactors (9, 26).

11. A high voltage power supply according to claim 9, wherein said firing circuitry comprises one firing unit (36) configured to provide firing pulses to said thyristor controller (5) during three-phase operation mode as well as single-phase operation mode of the high voltage power supply, and wherein said control unit (7) is configured to determine duration and firing angle of firing pulses provided to the thyristor controller (5) in dependence of the operation mode of the high voltage power supply.

12. A high voltage power supply according to claim 9, wherein said control unit (7) comprises a control panel (28) and microprocessor circuits (27) comprising software for the control of firing pulses in each one of the operation modes of the high voltage power supply.

13. A high voltage power supply according to claim 1, wherein the high volt-age power supply further comprises:

   • a thyristor controller (5) configured to control at the primary side of said three-phase high voltage transformer (3) an output power level of the high voltage power supply, said thyristor controller (5) comprising a set of antiparallel coupled thyristors for each phase of said industrial three-phase mains net; and
   • firing circuitry (46) configured to provide firing pulses to said thyristor controller (5) under control from a control unit (7),

   wherein said firing circuitry (46) and said control unit (7) are further configured to block firing pulses to the set of antiparallel coupled thyristors for one phase of said industrial three-phase mains net, so that in said second state one of the input terminals of the three-phase high voltage transformer (3) is disconnected from said industrial three-phase mains net.

14. A high voltage power supply according to claim 13, wherein said firing circuitry (46) and said control unit (7) are further configured to synchronize firing pulses in said second state to the sets of antiparallel coupled thyristors for the two remaining phases of said industrial three-phase mains net.

15. A high voltage power supply according to claim 13, wherein said firing circuitry (46) and said control unit (7) are further configured to continuously provide firing pulses in said second state to the set of antiparallel coupled thyristors for one of the two remaining phases of said industrial three-phase mains net.

16. An electrostatic precipitator apparatus comprising an electrostatic precipitator and a high voltage power supply according to any one of claims 1 to 15.

**Patentansprüche**

1. Hochspannungsleistungsversorgung umfassend einen Dreiphasenhochspannungstransformator (3) und einen Dreiphasenhochspannungsbrückengleichrichter (4), wobei eine primäre Seite des Dreiphasenhochspannungstransformators (3) drei Eingangsanschlüsse aufweist, wobei jeder mit einer der drei Phasen (A, B, C; L1, L2, L3) eines industriellen Dreiphasenstromnetzes verbindbar ist, und eine sekundäre Seite des Dreiphasenhochspannungstransformators (3) drei Ausgangsanschlüsse aufweist, die mit drei entsprechenden Eingangsanschlüssen des Dreiphasenhochspannungsbrückengleichrichters (4) verbunden sind, und wobei der Dreiphasenhochspannungsbrückengleichrichter (4) dazu konfiguriert ist, einer Last (2) eine gleichgerichtete Hochspannung zuzuführen, wobei die Hochspannungsleistungsversorgung einen ersten Zustand aufweist, in dem alle drei Eingangsanschlüsse des Dreiphasenhochspannungstransformators (3) mit entsprechenden Phasen des industriellen Dreiphasenstromnetzes verbunden sind und die Hochspannungsleistungsversorgung in einem Dreiphasenbetriebsmodus arbeiten kann, **dadurch gekennzeichnet, dass** die Hochspannungsleistungsversorgung ferner dazu konfiguriert ist, zwischen dem ersten Zustand und einem zweiten Zustand umzuschalten, in dem wenigstens einer der Eingangsanschlüsse des Dreiphasenhochspannungstransformators (3) von dem industriellen Dreiphasenstromnetz getrennt ist und die Hochspannungsleistungsversorgung in einem Einphasenbetriebsmodus arbeiten kann, wobei die Hochspannungsleistungsversorgung dazu konfiguriert ist, durch Trennen des wenigstens einen Eingangsanschlusses von dem industriellen Dreiphasenstromnetz von dem ersten Zustand zu dem zweiten Zustand umzuschalten.

**2.** Hochspannungsleistungsversorgung nach Anspruch 1, wobei die Hochspannungsleistungsversorgung ferner eine Umschaltvorrichtung (22; 9, 26) umfasst, die dazu konfiguriert ist, zwischen dem ersten Zustand und dem zweiten Zustand umzuschalten.

**3.** Hochspannungsleistungsversorgung nach Anspruch 2, wobei die Umschaltvorrichtung einen Kontaktgeber (22) umfasst, der dazu angeordnet ist, einen der Eingangsanschlüsse des Dreiphasenhochspannungstransformators (3) von dem industriellen Dreiphasenstromnetz zu trennen, so dass in dem zweiten Zustand zwei Eingangsanschlüsse des Dreiphasenhochspannungstransformators (3) mit zwei Phasen des industriellen Dreiphasenstromnetzes verbunden sind.

**4.** Hochspannungsleistungsversorgung nach Anspruch 2, wobei die Umschaltvorrichtung einen Kontaktgeber umfasst, der dazu angeordnet ist, zwei der Eingangsanschlüsse des Dreiphasenhochspannungstransformators (3) von dem industriellen Dreiphasenstromnetz zu trennen und einen von diesen mit einen Nullanschluss des industriellen Dreiphasenstromnetzes zu verbinden, so dass in dem zweiten Zustand zwei Eingangsanschlüsse des Dreiphasenhochspannungstransformators (3) mit einer Phase und dem Nullanschluss des industriellen Dreiphasenstromnetzes verbunden sind.

**5.** Hochspannungsleistungsversorgung nach Anspruch 2, wobei die Umschaltvorrichtung einen ersten Kontaktgeber (9), der dazu angeordnet ist, alle drei der Eingangsanschlüsse des Dreiphasenhochspannungstransformators (3) von dem industriellen Dreiphasenstromnetz zu trennen, und einen zweiten Kontaktgeber (26) umfasst, der dazu angeordnet ist, zwei Eingangsanschlüsse des Dreiphasenhochspannungstransformators (3) mit zwei Phasen des industriellen Dreiphasenstromnetzes zu verbinden, so dass in dem zweiten Zustand zwei Eingangsanschlüsse des Dreiphasenhochspannungstransformators (3) über den zweiten Kontaktgeber mit zwei Phasen des industriellen Dreiphasenstromnetzes verbunden sind.

**6.** Hochspannungsleistungsversorgung nach einem der Ansprüche 3 bis 5, wobei die Kontaktgeber (22; 9, 26) dazu konfiguriert sind, durch einen manuell betätigten Schalter (31) gesteuert zu werden.

**7.** Hochspannungsleistungsversorgung nach einem der Ansprüche 3 bis 5, wobei die Kontaktgeber (22; 9, 26) dazu konfiguriert sind, automatisch von einer Steuereinheit (7) gesteuert zu werden.

**8.** Hochspannungsleistungsversorgung nach Anspruch 3 oder 4, wobei die Hochspannungsleistungsversorgung ferner umfasst:

   • eine Thyristorsteuereinrichtung (5), die dazu konfiguriert ist, an der primären Seite des Dreiphasenhochspannungstransformators (3) ein Ausgangsleistungsniveau der Hochspannungsleistungsversorgung zu steuern, wobei die Thyristorsteuereinrichtung (5) einen Satz von antiparallelen gekoppelten Thyristoren für jede Phase des industriellen Dreiphasenstromnetzes umfasst; und
   • eine Zündschaltanordnung (6; 16), die dazu konfiguriert ist, unter einer Steuerung von einer Steuereinheit (7) in Abhängigkeit von dem Zustand des Kontaktgebers (22) Zündimpulse für die Thyristorsteuereinrichtung (5) bereitzustellen.

**9.** Hochspannungsleistungsversorgung nach Anspruch 5, wobei die Hochspannungsleistungsversorgung ferner umfasst:

   • eine Thyristorsteuereinrichtung (5), die dazu konfiguriert ist, an der primären Seite des Dreiphasenhochspannungstransformators (3) ein Ausgangsleistungsniveau der Hochspannungsleistungsversorgung zu steuern, wobei die Thyristorsteuereinrichtung (5) einen Satz von antiparallelen gekoppelten Thyristoren für jede Phase des industriellen Dreiphasenstromnetzes umfasst; und
   • eine Zündschaltanordnung (6; 16), die dazu konfiguriert ist, unter einer Steuerung von einer Steuereinheit (7) in Abhängigkeit von dem Zustand des ersten und des zweiten Kontaktgebers (9; 26) Zündimpulse für die Thyristorsteuereinrichtung (5) bereitzustellen.

**10.** Hochspannungsleistungsversorgung nach Anspruch 9, wobei die Zündschaltanordnung eine erste Zündeinheit (6), die dazu konfiguriert ist, während eines Dreiphasenbetriebsmodus der Hochspannungsleistungsversorgung Zündimpulse für die Thyristorsteuereinrichtung (5) bereitzustellen, und eine zweite Zündeinheit (16) umfasst, die dazu konfiguriert ist, während eines Einphasenbetriebsmodus der Hochspannungsleistungsversorgung Zündimpulse für die Thyristorsteuereinrichtung (5) bereitzustellen, und wobei die erste und die zweite Zündeinheit dazu konfiguriert sind, synchron mit dem ersten und dem zweiten Kontaktgeber (9, 26) aktiviert zu sein.

11. Hochspannungsleistungsversorgung nach Anspruch 9, wobei die Zündschaltanordnung eine Zündeinheit (36), die dazu konfiguriert ist, während eines Dreiphasenbetriebsmodus sowie eines Einphasenbetriebsmodus der Hochspannungsleistungsversorgung Zündimpulse für die Thyristorsteuereinrichtung (5) bereitzustellen, und wobei die Steuereinheit (7) dazu konfiguriert ist, eine Dauer und einen Zündwinkel von für die Thyristorsteuereinrichtung (5) bereitgestellten Zündimpulsen in Abhängigkeit von dem Betriebsmodus der Hochspannungsleistungsversorgung zu bestimmen.

12. Hochspannungsleistungsversorgung nach Anspruch 9, wobei die Steuereinheit (7) eine Steuertafel (28) und Mikroprozessorschaltungen (27) umfassend Software für die Steuerung von Zündimpulsen in jedem der Betriebsmodi der Hochspannungsleistungsversorgung umfasst.

13. Hochspannungsleistungsversorgung nach Anspruch 1, wobei die Hochspannungsleistungsversorgung ferner umfasst:

   • eine Thyristorsteuereinrichtung (5), die dazu konfiguriert ist, an der primären Seite des Dreiphasenhochspannungstransformators (3) ein Ausgangsleistungsniveau der Hochspannungsleistungsversorgung zu steuern, wobei die Thyristorsteuereinrichtung (5) einen Satz von antiparallelen gekoppelten Thyristoren für jede Phase des industriellen Dreiphasenstromnetzes umfasst; und
   • eine Zündschaltanordnung (46), die dazu konfiguriert ist, unter einer Steuerung von einer Steuereinheit (7) Zündimpulse für die Thyristorsteuereinrichtung (5) bereitzustellen,

   wobei die Zündschaltanordnung (46) und die Steuereinheit (7) ferner dazu konfiguriert sind, für eine Phase des industriellen Dreiphasenstromnetze Zündimpulse zu dem Satz von antiparallelen gekoppelten Thyristoren s zu blockieren, so dass in dem zweiten Zustand einer der Eingangsanschlüsse des Dreiphasenhochspannungstransformators (3) von dem industriellen Dreiphasenstromnetz getrennt ist.

14. Hochspannungsleistungsversorgung nach Anspruch 13, wobei die Zündschaltanordnung (46) und die Steuereinheit (7) ferner dazu konfiguriert sind, in dem zweiten Zustand für die verbleibenden zwei Phasen des industriellen Dreiphasenstromnetzes Zündimpulse zu den Sätzen von antiparallelen gekoppelten Thyristoren zu synchronisieren.

15. Hochspannungsleistungsversorgung nach Anspruch 13, wobei die Zündschaltanordnung (46) und die Steuereinheit (7) ferner dazu konfiguriert sind, in dem zweiten Zustand für eine der zwei verbleibenden Phasen des industriellen Dreiphasenstromnetzes Zündimpulse zu dem Satz von antiparallelen gekoppelten Thyristoren kontinuierlich bereitzustellen.

16. Elektrostatische Abscheidevorrichtung umfassend einen elektrostatischen Abscheider und eine Hochspannungsleistungsversorgung nach einem der Ansprüche 1 bis 15.

**Revendications**

1. Alimentation en haute tension comprenant un transformateur de haute tension triphasé (3) et un redresseur en pont haute tension triphasé (4), dans laquelle un côté primaire dudit transformateur de haute tension triphasé (3) présente trois bornes d'entrée qui peuvent chacune être connectées à l'une parmi trois phases (A, B, C ; L1, L2, L3) d'un réseau triphasé industriel, et un côté secondaire dudit transformateur de haute tension triphasé (3) présente trois bornes de sortie connectées à trois bornes d'entrée correspondantes dudit redresseur en pont haute tension triphasé (4), et dans laquelle ledit redresseur en pont haute tension triphasé (4) est configuré de manière à fournir une haute tension redressée à une charge (2), l'alimentation en haute tension présentant un premier état, dans laquelle les trois bornes d'entrée du transformateur de haute tension triphasé (3) sont connectées à des phases correspondantes dudit réseau triphasé industriel et l'alimentation en haute tension peut fonctionner dans un mode de fonctionnement triphasé, **caractérisée en ce que** l'alimentation en haute tension est en outre configurée de manière à commuter entre ledit premier état et un second état, dans laquelle au moins l'une des bornes d'entrée du transformateur de haute tension triphasé (3) est déconnectée dudit réseau triphasé industriel et l'alimentation en haute tension peut fonctionner dans un mode de fonctionnement monophasé, dans laquelle l'alimentation en haute tension est configurée de manière à commuter du premier état au second état en déconnectant ladite au moins une borne d'entrée du réseau triphasé industriel.

**2.** Alimentation en haute tension selon la revendication 1, dans laquelle l'alimentation en haute tension comprend en outre un dispositif de commutation (22 ; 9, 26) configuré de manière à commuter entre ledit premier état et ledit second état.

**3.** Alimentation en haute tension selon la revendication 2, dans laquelle ledit dispositif de commutation comprend un contacteur (22) agencé de manière à déconnecter l'une des bornes d'entrée du transformateur de haute tension triphasé (3) dudit réseau triphasé industriel, de sorte que, dans ledit second état, deux bornes d'entrée du transformateur de haute tension triphasé (3) sont connectées à deux phases dudit réseau triphasé industriel.

**4.** Alimentation en haute tension selon la revendication 2, dans laquelle ledit dispositif de commutation comprend un contacteur agencé de manière à déconnecter deux des bornes d'entrée du transformateur de haute tension triphasé (3) dudit réseau triphasé industriel, et à connecter l'une d'entre elles à une borne zéro dudit réseau triphasé industriel, de sorte que, dans ledit second état, deux bornes d'entrée du transformateur de haute tension triphasé (3) sont connectées à une phase et à ladite borne zéro dudit réseau triphasé industriel.

**5.** Alimentation en haute tension selon la revendication 2, dans laquelle ledit dispositif de commutation comprend un premier contacteur (9) agencé de manière à déconnecter les trois bornes d'entrée du transformateur de haute tension triphasé (3) dudit réseau triphasé industriel, et un second contacteur (26) agencé de manière à connecter deux bornes d'entrée du transformateur de haute tension triphasé (3) à deux phases dudit réseau triphasé industriel, de sorte que, dans ledit second état, deux bornes d'entrée du transformateur de haute tension triphasé (3) sont connectées à deux phases dudit réseau triphasé industriel par l'intermédiaire dudit second contacteur.

**6.** Alimentation en haute tension selon l'une quelconque des revendications 3 à 5, dans laquelle lesdits contacteurs (22 ; 9, 26) sont configurés de manière à être commandés par un commutateur à commande manuelle (31).

**7.** Alimentation en haute tension selon l'une quelconque des revendications 3 à 5, dans laquelle lesdits contacteurs (22 ; 9, 26) sont configurés de manière à être commandés automatiquement à partir d'une unité de commande (7).

**8.** Alimentation en haute tension selon la revendication 3 ou 4, dans laquelle l'alimentation en haute tension comprend en outre :

• un contrôleur à thyristors (5) configuré de manière à commander, au niveau du côté primaire dudit transformateur de haute tension triphasé (3), un niveau de puissance de sortie de l'alimentation en haute tension, ledit contrôleur à thyristors (5) comprenant un ensemble de thyristors couplés en antiparallèle pour chaque phase dudit réseau triphasé industriel ; et
• un montage de circuits d'amorçage (6 ; 16) configuré de manière à fournir des impulsions d'amorçage audit contrôleur à thyristors (5) sous la commande d'une unité de commande (7) en fonction de l'état dudit contacteur (22).

**9.** Alimentation en haute tension selon la revendication 5, dans laquelle l'alimentation en haute tension comprend en outre :

• un contrôleur à thyristors (5) configuré de manière à commander, au niveau du côté primaire dudit transformateur de haute tension triphasé (3), un niveau de puissance de sortie de l'alimentation en haute tension, ledit contrôleur à thyristors (5) comprenant un ensemble de thyristors couplés en antiparallèle pour chaque phase dudit réseau triphasé industriel ; et
• un montage de circuits d'amorçage (6 ; 16) configuré de manière à fournir des impulsions d'amorçage audit contrôleur à thyristors (5) sous la commande d'une unité de commande (7) en fonction de l'état desdits premier et second contacteurs (9, 26).

**10.** Alimentation en haute tension selon la revendication 9, dans laquelle ledit montage de circuits d'amorçage comprend une première unité d'amorçage (6) configurée de manière à fournir des impulsions d'amorçage audit contrôleur à thyristors (5) au cours du mode de fonctionnement triphasé de l'alimentation en haute tension, et une seconde unité d'amorçage (16) configurée de manière à fournir des impulsions d'amorçage audit contrôleur à thyristors (5) au cours du mode de fonctionnement monophasé de l'alimentation en haute tension, et dans laquelle lesdites première et seconde unités d'amorçage sont configurées de manière à être activées en synchronisme avec lesdits premier et second contacteurs (9, 26).

**11.** Alimentation en haute tension selon la revendication 9, dans laquelle ledit montage de circuits d'amorçage comprend une unité d'amorçage (36) configurée de manière à fournir des impulsions d'amorçage audit contrôleur à thyristors (5) au cours du mode de fonctionnement triphasé ainsi qu'au cours du mode de fonctionnement monophasé de l'alimentation en haute tension, et dans laquelle ladite unité de commande (7) est configurée de manière à déterminer une durée et un angle d'amorçage d'impulsions d'amorçage fournies au contrôleur à thyristors (5) en fonction du mode de fonctionnement de l'alimentation en haute tension.

**12.** Alimentation en haute tension selon la revendication 9, dans laquelle ladite unité de commande (7) comprend un panneau de commande (28) et des circuits à microprocesseur (27) comprenant un logiciel pour la commande d'impulsions d'amorçage dans chacun des modes de fonctionnement de l'alimentation en haute tension.

**13.** Alimentation en haute tension selon la revendication 1, dans laquelle l'alimentation en haute tension comprend en outre :

• un contrôleur à thyristors (5) configuré de manière à commander, au niveau du côté primaire dudit transformateur de haute tension triphasé (3), un niveau de puissance de sortie de l'alimentation en haute tension, ledit contrôleur à thyristors (5) comprenant un ensemble de thyristors couplés en antiparallèle pour chaque phase dudit réseau triphasé industriel ; et
• un montage de circuits d'amorçage (46) configuré de manière à fournir des impulsions d'amorçage audit contrôleur à thyristors (5) sous la commande d'une unité de commande (7) ;

dans lequel ledit montage de circuits d'amorçage (46) et ladite unité de commande (7) sont en outre configurés de manière à bloquer des impulsions d'amorçage vers l'ensemble de thyristors couplés en antiparallèle pour une phase dudit réseau triphasé industriel, de sorte que, dans ledit second état, l'une des bornes d'entrée du transformateur de haute tension triphasé (3) est déconnectée dudit réseau triphasé industriel.

**14.** Alimentation en haute tension selon la revendication 13, dans laquelle ledit montage de circuits d'amorçage (46) et ladite unité de commande (7) sont en outre configurés de manière à synchroniser des impulsions d'amorçage dans ledit second état avec les ensembles de thyristors couplés en antiparallèle pour les deux phases restantes dudit réseau triphasé industriel.

**15.** Alimentation en haute tension selon la revendication 13, dans laquelle ledit montage de circuits d'amorçage (46) et ladite unité de commande (7) sont en outre configurés de manière à fournir en continu des impulsions d'amorçage dans ledit second état à l'ensemble de thyristors couplés en antiparallèle pour l'une des deux phases restantes dudit réseau triphasé industriel.

**16.** Appareil de précipitation électrostatique comprenant un précipitateur électrostatique et une alimentation en haute tension selon l'une quelconque des revendications 1 à 15.

Fig. 1

Fig. 2

Fig. 3

Fig. 4

Fig. 5

Fig. 6

Fig. 7

Fig. 8

Fig. 9

Fig. 10

EP 3 123 605 B1

Fig. 11

Fig. 12

Fig. 13

EP 3 123 605 B1

Fig. 14

EP 3 123 605 B1

Fig. 15

**EP 3 123 605 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5920474 A
- WO 9416820 A